# EUROPEAN PATENT APPLICATION

(11) **EP 4 567 751 A1**
(43) Date of publication of application: **11.06.2025**
(21) Application number: 23215093.8
(22) Date of filing: 07.12.2023
(51) Int. Cl.: G06V 20/59, B60R 21/015

(54) **IN-CABIN OBJECT MOVEMENT DETECTION**

(71) Applicant: Aptiv Technologies AG, 8200 Schaffhausen (CH)
(72) Inventor: Hahn, Lukas, 42113 Wuppertal (DE); Barth, Alexander, 42929 Wermelskirchen (DE); Hasecke, Frederik, 42719 Solingen (DE)
(74) Representative: Bardehle Pagenberg Partnerschaft mbB Patentanwälte Rechtsanwälte

(57) **Abstract**

This invention relates to vehicle cabin safety and in particular to the detection of objects and their movements in a vehicle cabin. Based on one or more images showing an interior of the vehicle cabin, at least one object in the vehicle cabin is determined. A number of features of the at least one object and a danger level for the at least one object is determined based on the number of features. In response to determining that the danger level meets a given criteria, a warning signal is outputted.

## Description

### FIELD

The present disclosure generally relates to safety and control improvements for vehicles and, in particular, to methods and systems for In-Cabin Object Movement Detection.

### BACKGROUND

Smart vehicles, such as smart cars, smart busses, and the like, are on their way to significantly improve the safety of passengers. Such smart vehicles may be equipped with on-board cameras and may be capable of capturing images of the vehicle's interior. Those images may then be used, sometimes in combination with other sensors, for different safety related tasks, such as detecting objects and their movements in the vehicle, as well as tasks such as seatbelt assistance, detecting persons in the vehicle, categorizing persons in adults or children, determining whether one of the vehicle's door is open, or the like.

Storing large volumes of luggage and heavy objects or items in the vehicle and especially in the cabin of a vehicle may have impact on the safety of passengers in different ways. If unsecured e. g. by safety belts, especially heavy objects such as suitcases may pose a threat to the safety of the driver of a vehicle as well as the passengers in case of strong accelerations of the vehicle, e. g. an emergency braking. In addition, heavy objects such as suitcases or other luggage of greater mass moving during driving of the vehicle may potentially negatively affect the maneuverability of the vehicle and the ability of the driver to operate the vehicle. Further, large objects may influence or completely block the driver's view, e. g. through the rear window, on the traffic behind the car.

### SUMMARY

The present disclosure relates to a vehicle cabin safety system. For the safety of the driver of the vehicle as well as the passengers, objects and their movement in the vehicle cabin are detected before they may become potentially dangerous projectiles or otherwise negatively impact the safety of driving.

In this context, methods, systems and computer program products are presented as defined by the independent claims.

In this respect, according to a first aspect, a method for vehicle cabin safety is provided. The method comprises determining, based on one or more images showing an interior of the vehicle cabin, at least one object in the vehicle cabin; determining a number of features of the at least one object; determining a danger level for the at least one object based on the number of features and in response to determining that the danger level meets a given criteria, outputting a warning signal.

In another aspect, a vehicle cabin safety system executing a vehicle cabin safety function is provided, comprising a sensor system, a data processing system, interfaces for outputting a warning signal.

In another aspect, a vehicle is provided comprising a vehicle system as described herein.

Finally, a computer program is presented that comprises instructions which, when the program is executed by a computer, cause the computer to carry out the methods described herein.

Further refinements are set forth by the dependent claims.

These and other objects, embodiments and advantages will become readily apparent to those skilled in the art from the following detailed description of the embodiments having reference to the attached figures, the invention not being limited to any particular embodiments.

### BRIEF DESCRIPTION OF THE FIGURES

Aspects and examples of the present disclosure are described with reference to the following figures, in which:
FIG. 1 shows the interior of a vehicle cabin with objects and persons.
FIG. 2 shows a portion of the interior of the vehicle cabin with an object positioned on the backseat.
FIG. 3 depicts a computer-implemented sequence for the detection of an object and its movement in a vehicle cabin as described herein.
FIG. 4 depicts a further computer-implemented sequence for the detection of an object and its movement in a vehicle cabin as described herein.
FIG. 5 depicts computer-implemented sequences for tracking the movement state of an object in a vehicle cabin as described herein.
FIG. 6 illustrates bounding boxes of the objects as shown in FIG. 1.
FIG. 7 depicts a computer-implemented sequence for determining object features as described herein.
FIG. 8 depicts a further computer-implemented sequence for the detection of an object and its movement in a vehicle cabin.
FIG. 9 shows a computer-implements sequence for the determination of the danger level of an object inside a vehicle cabin as described herein.
FIG. 10 shows a further computer-implemented sequence for the determination of the danger level of an object inside a vehicle cabin.
FIG. 11 depicts a computer-implemented sequence for outputting a warning signal as described herein.
FIG. 12 illustrates the taking of an image as described herein.
FIG. 13 schematically shows a system for determination of the movement of objects inside a vehicle cabin as described herein.
FIG. 14 schematically illustrates a further system for determination of the movement of objects inside a vehicle cabin.
FIG. 15 schematically shows a further system for determination of the movement of objects inside a vehicle cabin as described herein.
FIG. 16 schematically shows a further system for determination of the movement of objects inside a vehicle cabin.
FIG. 17 is a diagrammatic representation of internal components of a data processing system comprises by the system for determination of the movement of objects inside a vehicle cabin.

### DETAILED DESCRIPTION

The present disclosure relates to safety improvements for vehicles and, in particular, to methods and systems for the detection of an object in a vehicle cabin and for determining its movement.

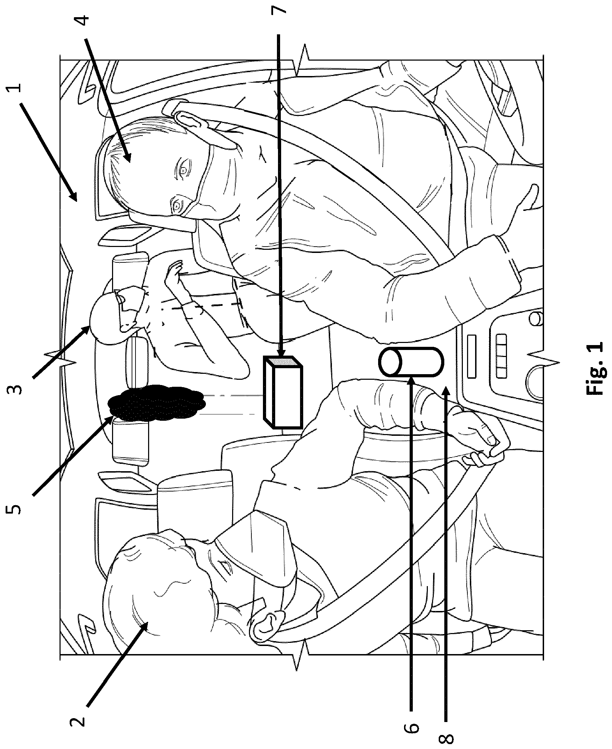

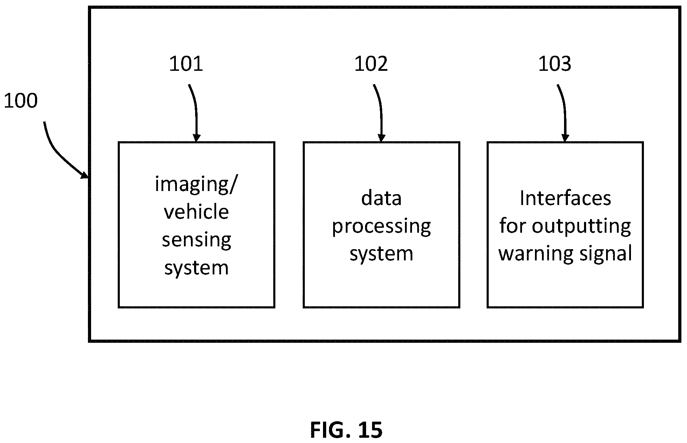

FIG. 1 depicts the interior of a cabin 1 of a vehicle as it is seen in a field-of-view of an imaging system/vehicle sensing system 101, as part of a system 100 for determining of an object in a vehicle cabin 1 and its movement, as shown in FIG. 15, and installed in the cabin 1. In FIG. 1 the imaging systems 101 which may comprise a camera, is located at the rear mirror at the front shield of the vehicle (not shown in FIG. 1).

Three persons 2, 3 and 4 are seated in the vehicle. Person 4 is seated in the driver seat of the vehicle, while person 3 is seated on the back seat and person 2 on the passenger seat next to the driver seat. A number of objects are located inside the cabin. Between persons 2 and 4, on the middle console 8 of the vehicle cabin 1, a can or bottle 6 such as a cola dose is positioned. On the back seat of the vehicle, a box 7 is deposited. Also, on the top of the back rest of the back seat, a soft object 5, such as a jacket, is deposited, e. g. by the person 3 sitting on the back seat.

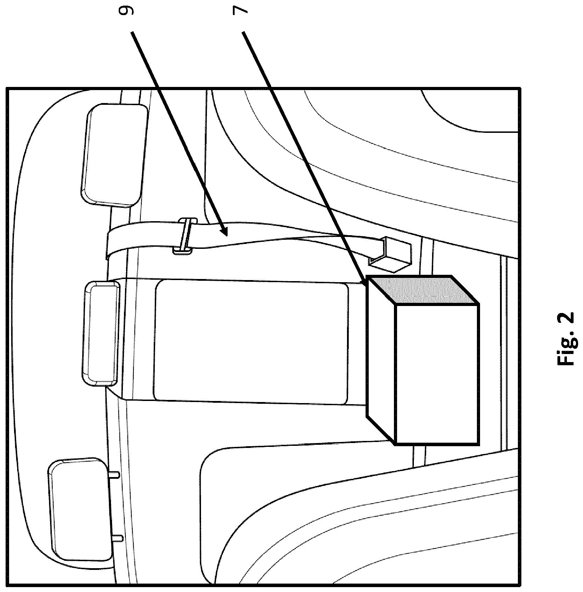

FIG. 2 depicts a portion of the interior of a cabin 1 of a vehicle as it is seen in a field-of-view of the imaging system/vehicle sensing system 101 installed in the cabin 1. FIG. 2 shows the boxy object 7 of FIG. 1 located on the back seat. The box 7 is not secured in its position on the back seat by any means such as e. g. by seat belt 9 shown in FIG. 2. When closer examining FIG. 2, seat belt 9 instead hangs unused over the back rest of the back seat of the vehicle cabin 1. Also, no other means are used for fixing box 7 in its position. Therefore, in the case of e. g. a speedy acceleration by the vehicle, or taking a heavy turn or an emergency braking of the vehicle, box 7 may, under the forces of inertia (Newton's law), begin to move away from its resting position and start to fly around in the vehicle cabin, thereby e. g. hitting other persons, such as driver 4, causing e. g. injuries to the driver 4 and also endangering the safety of the passengers of the vehicle, such as persons 2 and 3. Furthermore, in the case when the driver 4 is unexpectedly hit by the box 7, the driver 4 may, being shocked in in response to that hit, cause an abrupt steering of the vehicle, causing e. g. the vehicle to left its driving lane on the street, therefore endangering the surrounding traffic, such as other vehicles, pedestrians or cyclists.

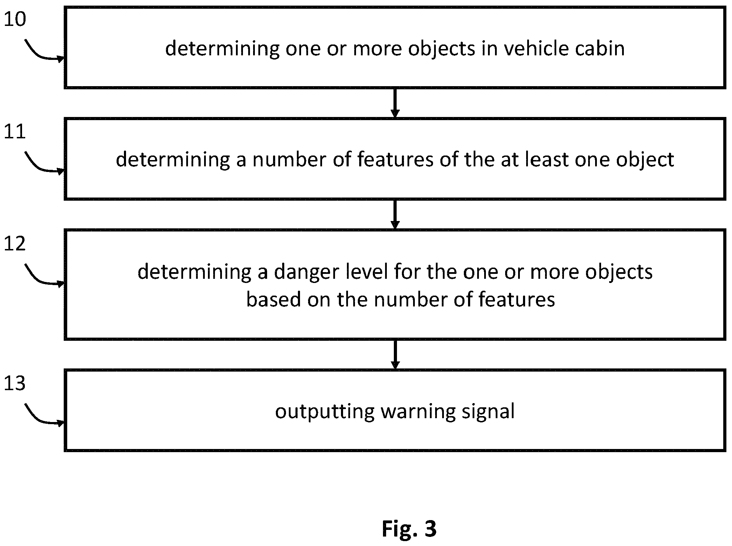

FIG. 3 is a basic flow chart of the method for the detection of an object in a vehicle cabin 1 and its movement as disclosed herein. The method determines, in activity 10, based on one or more images showing an interior of the vehicle cabin 1, at least one object 5, 6, 7 in the vehicle cabin 1. The method determines, in an activity 11, a number of features of the at least one object 5, 6, 7 and determines, in an activity 12, a danger level for the at least one object 5, 6, 7 based on the number of features. In response to determining that the danger level meets a given criteria, the method outputs, in an activity 13, a warning signal. This enhances the safety of the driver 4 of the vehicle and the passengers 2, 3 by detecting all items and their movement in the vehicle before they may become potentially dangerous projectiles or otherwise negatively impact the safety of driving.

Images may be taken from one or more cameras capturing the interior of cabin 1 of the vehicle. These cameras may produce visible light images and/or near-infrared images. The camera(s) may be mounted in different locations within the vehicle. At least one camera may be mounted in the cabin 1, for example, in the front rear-view mirror position, as shown in FIG.2, and/or in the center of the dashboard, below the roof, above the second seat row, or in the trunk.

The images may comprise 2D-images and/or 3D-images. The images may further comprise color images or grayscale images. The images may further comprise pixel-based images.

Determination 10 of the at least one object 5, 6, 7 may be performed on the basis of the images by using an object detection algorithm. Per object 5, 6, 7 in the cabin 1 of the vehicle, the algorithm will generate output data comprising image coordinates relating to the position of the object 5, 6, 7, as well as data relating to the class and/or the type of the object 5, 6, 7. While relevant everyday objects may be classified as individual object classes (e.g., phone, laptop, bottle, jacket, bag, etc.), more unusual objects such as e. g. a skateboard or a bicycle may be classified as "other object".

The image data may be processed by a pixel-wise by the object detection algorithm using segmentation and classification algorithms for identifying pixel regions that may belong to objects 5, 6, 7 that are not part of the cabin 1 of the vehicle. In embodiments, the object detection algorithm may be using 3D clustering and segmentation algorithms, with the image data being processed in a preprocessing activity to generate a 3D point cloud or depth map, e. g., based Time-of-Flight (TOF), structured light, stereo, mono depth estimations. The 3D data map be compared to a 3D reference model of the cabin 1 of the vehicle to identify potential objects 5, 6, 7. These objects 5, 6, 7 may be further classified in another activity to identify moving objects 5, 6, 7 from fixed cabin elements or persons, such as the driver 4 of the vehicle or the (passenger) persons 2 and 3.

The danger level may comprise a numerical scale such as a scale comprising numerical values ranging from 0 to 9, with a value of 0 or 1 indicating that no danger or a negligible danger emerges from an object 5, 6, 7 inside the vehicle cabin, such as a child's seat fixed at the back seat, with values of 2 and 3 indicating e. g. a low danger, e. g. emerging from a smartphone, with a value of 5 indicating a medium danger, e, g, emerging from a cola dose positioned on the middle console and with a value of 9 indicating high danger, e. g. from a suitcase deposited on the back seat, but without being fixed e. g. by a seat belt. The danger level may comprise, in some embodiments, a simple three level indication comprising values 0, 1 and 2, corresponding to "no danger", "medium danger" and "extreme danger", respectively or even a more two-level indication, using the binary values 0 and 1, corresponding either to the level "no danger" or "danger", corresponding either to a "static" or "moving" object. The choice of an appropriate numerical scale may depend on the object type, the occupancy and/or the driving state of the vehicle, but may also depend e. g. on the vehicle type. This enables a precise determination of the danger level, adapted on the vehicle situation.

When the determined danger level meets given criteria, such as the determined numerical danger level value exceeding the numerical values corresponding to the levels of "no danger" or "negligible danger", a warning signal may be outputted e. g. to warn the driver 4 and/or the passengers 2 and 3, otherwise, no warning signal may be outputted.

Outputting 13 a warning signal may comprise outputting a visible signal, such as a message on an infotainment display in the cabin 1 and/or the driver's instrument cluster and/or audio signal. This enables an output adapted to the requirements of the driver 4 and/or the passengers 2, 3.

Depending on the determined danger level, different warning signals may be outputted. If there are no objects 3, 4, 5 detected in the cabin 1, or, as already described, no danger or only a negligible danger emerges from the objects 5, 6, 7, no warning signal is outputted. If the determined danger level is low (e. g. the object 5, 6, 7 being a smartphone), the output signal may be either also fully suppressed or outputted, however, without a requirement for confirmation e. g. by the driver 4 (or the passengers 2, 3). If the potential risk is estimated to be high, a warning signal may be outputted e. g. by a pop-up message on a touch screen of the dashboard of the vehicle (smart car) or the smart phone of the driver 4, a notification sound or location specific sound, requiring an active confirmation of the driver 4 (or the passengers 2, 3). A confirmation may comprise the detection and the acknowledgement, by a computing/data processing system 102 (FIG. 15) of the vehicle, of a hand gesture or a head gesture or a voice command of the diver 4 (or the passengers 2,3), or the pressing of a button or said touch screen by the driver 4 (or the passengers 2, 3).

For potentially objects 5, 6, 7, danger levels may be determined and warning signals may be output independently of a movement detection of said object 5, 6, 7, but based on the detected type and size of the object 5, 6, 7, such as a big suitcase or a skateboard, to enable warnings to the driver 4 (or the passengers 2, 3) once the vehicle has been started, but before driving off. In some embodiment the driving off of the vehicle may even be blocked by this warning and requires the driver to check the loaded objects and to confirm that it is safe to start the vehicle.

In embodiments, different stages of warnings might be used depending on the determined danger level. If a warning signal comprising a pop-up message requiring confirmation by e. g. the driver 4 does not resolve the situation relating to the objects 5, 6, 7 causing the danger and/or the determined danger level increases further, additional more attention-grabbing display messages may be issued to the driver 4. In embodiments audio warning beeping tones with increasing intensity may be issued to the driver 4 (or the passengers 2, 3).

In embodiments, when a danger level may be determined for an object 5, 6, 7 when the vehicle is in the driving stage and the driver 4 is either unable or unwilling to stop the vehicle, the advanced driver-assistance system (ADAS) may be instructed to execute activities causing the driving vehicle to increase its distance to preceding vehicles on the street to defined distances and/or to execute a braking algorithm for less abrupt deceleration of the vehicle if the traffic situation around the vehicle permits said activity and/or to reduce the overall speed of the vehicle and/or to reduce the overall acceleration of the vehicle and/or to drive appropriately in turns and curves.

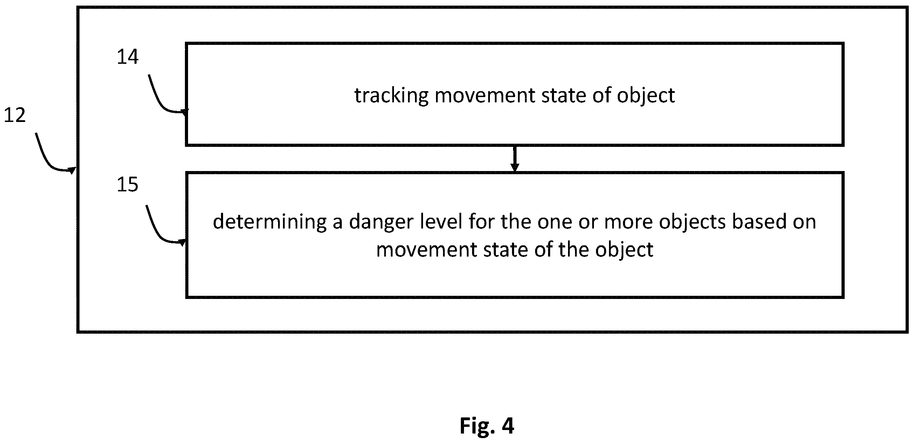

In some embodiments, and as shown in FIG. 4, the method further comprises tracking, in an activity 14, based on multiple images showing the interior of the vehicle cabin 1, a movement state of the object 5, 6, 7, wherein determining 15 the danger level is additionally based on the movement state of the object. Situations in which the vehicle is driving or accelerating, such as increasing its speed, braking or driving through a curve, objects deposited in a cabin 1 may begin to move, e. g. to slide, roll or to fly around inside the cabin, any by this way may hit a person in the cabin 1 or block the view of the driver 4 onto the surrounding traffic or block the undisturbed movement of the driver's legs in order to operate the vehicles pedals, such as the braking pedal. Tracking objects moving in the vehicle while vehicle driving or de-/accelerating further enhances the safety of the driver 4 and/or the passengers of the vehicle especially when the vehicle is in a driving state.

The movement state of the object 5, 6, 7 may comprise the sliding or rolling of the object on or from e. g. a vehicle seat or a console or a trunk inside the vehicle cabin 1. The movement may also comprise the flying of the object 5, 6, 7 inside the vehicle cabin. The movement any comprise any other dynamic state of the object 5, 6, 7 such as tilting, turning, floating etc.

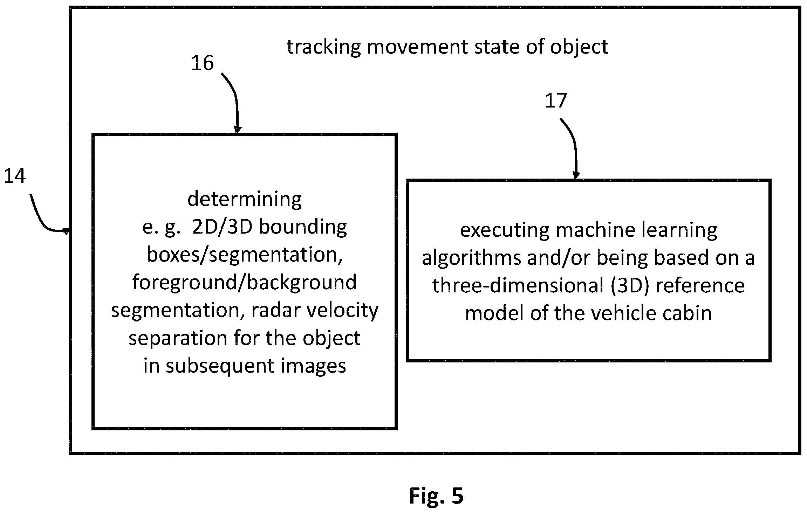

In some embodiments and as shown in FIG. 5, tracking 14 the movement state of the object comprises determining 16 bounding boxes for the object in subsequent images. A tracking algorithm may be used to continuously track the position of the object, such as object 5, 6, 7, over time. The position may be defined by the bounding box position of one object over time, or a reference point (e.g. object center or other characteristic point). This enables to analyze a potential movement of the object (e. g. object 5, 6, 7). This tracking algorithm may utilize a Kalman filter, a particle filter, machine learning-based approach or other tracking method.

Bounding boxes may be used to compute optical flow information on input images or specific regions thereof to detect movements of an object and to derive displacement information relating to said object (e. g. object 5, 6, 7) in the image plane. As an example, trackable features within bounding boxes may be detected and a descriptor to encode the features may be used. Then the displacement of the feature based on the descriptor may be tracked. A sparse feature tracking method may be the Kanade-Lucas-Tomasi (KLT) tracker. Also, dense optical flow methods may be used. The optical flow computation may be limited to the object bounding box. Instead, the computation may be executed in a larger image region or on the full image and may be used as input for object detection. This may be executed on down-sampled versions of the image to reduce computational complexity, or just on specific parts of the image showing parts of the vehicle cabin 1 where larger and potentially dangerous objects may be generally stored, e.g., the rear seats or the trunk of the vehicle.

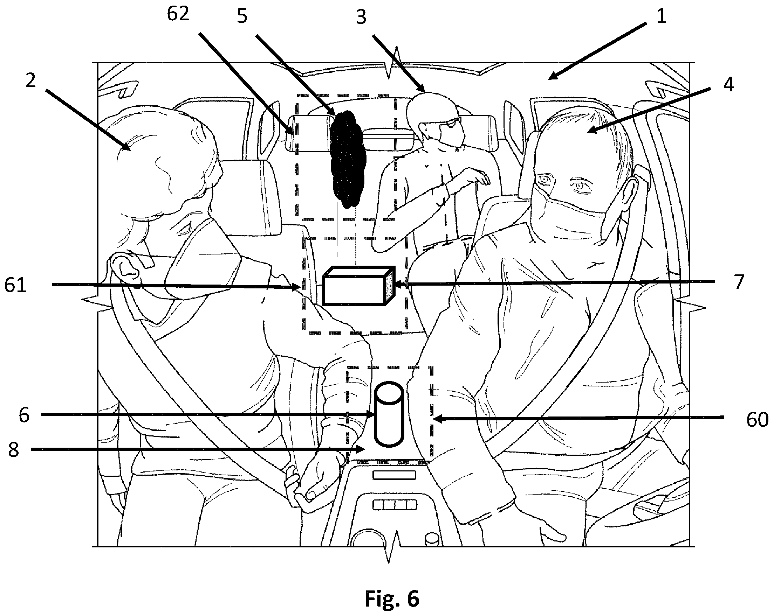

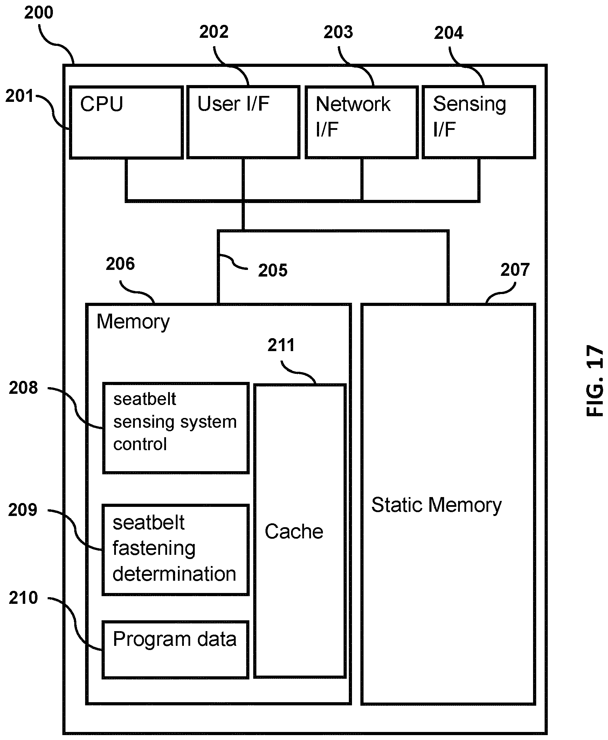

FIG. 6 exemplarily shows a number of bounding boxes 60, 61 and 62 surrounding the object 5, 6, 7, respectively. The bounding boxes may be defined by a processing software applied on the data generated by the imaging system/vehicle sensing system 101 (FIG. 17). The objects 5, 6, 7 may be clearly visible (as shown) by the imaging system/vehicle sensing system 101 or may also be obstructed to some part. In FIG. 6, the following bounding boxes are determined, which may be applied for each picture being taken e. g. by the imaging system/vehicle sensing system 101:
- bounding box 60 surrounding object 6, e. g. a coke can,
- bounding box 61 surrounding object 7, e. g. a box containing a bottle of wine;
- bounding box 62 surrounding object 5, e. g. a jacket.

The bounding boxes may be defined by at least a width, a height, a center x position, and a center y position relative to an image taken by e. g. a camera of the imaging system/vehicle sensing system 101. However, depending on the occupancy situation of the vehicle cabin 1 and the constructive boundary conditions of the cabin 1 itself, other shapes used for the bounding areas may be more suited for a successful tracking of the movement of objects, such as objects 5, 6, 7, than a rectangular surface. In some embodiments, the bounding areas surrounding an object comprise a circular surface, which usually defined a closer area around an object than a rectangular surface. In some further embodiments, the areas comprise a bounding area of any spatial dimension, such as a three-dimensional bounding area (see also FIG. 5), which is useful in the case the vehicle sensing system 101 supports three-dimensional imaging on the vehicle cabin 1 and the persons inside the cabin 1. Also, 3D-bounding boxes may be estimated if the vehicle sensing system 101 does not provide depth information, e.g. by approximation from 2D-sensor and machine learning methods. In further embodiments, any shape for the bounding areas suited for indicating objects under a given sensing technology may be used or, alternatively, no surrounding area is defined but only object keypoints are determined. In embodiments, pixel wise object segmentation may be used for object detection, assigning every pixel with an object class label and an object ID. For determining bounding areas, e. g., bounding boxes around the objects, a YOLO (you only look once) algorithm, e. g. YOLO 2, may be used. Other machine learning algorithms or conventional image processing and recognition algorithms may be used, too.

In embodiments, the bounding boxes may comprise three-dimensional (3D) bounding boxes surrounding an object, such as objects 5, 6, 7. If a three-dimensional (3D) object detection is available, the movement tracking of an object (e. g. object 5, 6, 7) may also be done in a 3D coordinate system representing the interior of the vehicle cabin 1. By comparing the carved-out volume of two sequential time frames, a movement of an object (e. g. object 5, 6, 7) may be derived by the change of the center of gravity of the object 5, 6, 7 using e. g. instance segmented clusters enabling the tracking of the movement of single objects in a group or cluster of objects. Without using instance segmented clusters, the change of a 3D-bounding box indicates a general movement of an object cluster in the interior of the vehicle cabin 1. By additionally using radar-based information (see also FIG. 5), the velocity information from a radar sensor may be included in the determination of a movement of an object by fusing the velocities determined from the vision-based tracking by using visible and/or infrared camera with the velocity determined from the radar-based information. Radar sensors may provide a radial doppler estimation that can be fused with the lateral detected movement of the vision-based (Vis/IR) camera system 101 for a complete 3D velocity profile.

In embodiments, the bounding box surrounding an object, such as object 5,6,7 may comprise data relating to the type or class of the object. This enables a reliable and dynamic determination of the danger level of the corresponding object.

In some embodiments and as shown in FIG. 5, tracking 14 the movement state of the object 5, 6, 7 comprises executing 17 machine learning algorithms and/or being based on a three-dimensional (3D) reference model of the vehicle cabin 1, enabling a precise calculation and prediction of a movement of an object, such as objects 5, 6, 7.

In embodiments, using a 3D-camera, the system 100 for detection of an object in a vehicle cabin 1 and its movement may be configured to estimate the height position of an object above a given seat or head rest, such as the driver seat. Objects positioned in the cabin 1 in a height being above a head rest may considered of highest risk, corresponding e. g. to a determined danger level of "high". 3D image data relating to the height above the seat, e. g. the driver seat, may be obtained from the 3D spatial position information relating to the space above the head rest of the driver seat and the bounding box. With respect to 2D image data, the 2D bounding box of a detected object may be compared to the 2D position of the seats and head rests. By using cabin specific calibration and considering the viewing point of the camera and the perspective properties, the relative height position of an object with respect to a person's head may be determined.

In some further embodiments, adjustable seats, such as the driver seat and the passenger seat next to the driver, may be detected based on the images by using an object detection algorithm. This enables the detection of objects that belong to the cabin (e.g., seat head rests) in combination with detection of objects in the cabin, such as objects 5, 6, 7 in one algorithm (e.g., neural network model).

In some further embodiments, the machine learning based methods comprise neural networks and/or supervised learning and/or unsupervised learning and/or reinforcement learning and/or decision trees. In embodiments, a danger level classifier being a neural network is comprised with a first input channel configured to receive one (or more) current image(s) from e. g. a camera system of the imaging system/vehicle sensing 101. The danger level classifier is trained to compute a value indicating a danger level, e. g. a value from the aforementioned numerical scale of 0 to 9, indicating danger level ranging from "no danger" to "high danger". The danger level classifier may then also output the computed value, and in further embodiments, along with a confidence score. This reduces the likelihood of an incorrect determination of a danger level of an object, such as objects 5, 6, 7, based on the detected position and/or movement of e. g. the object 5, 6, 7 in the cabin 1, since e. g. corresponding data of earlier correct determinations of danger levels of objects by the system 100 for the detection of an object in a vehicle cabin 1 and its movement may also form the basis of the current determination of the danger level of e. g. objects 5, 6, 7, thereby strengthening the reliability of the system 100.

A three-dimensional (3D) reference model of the vehicle cabin 1 may comprise e. g. of the locations of a middle console relative to the imaging system/vehicle sensing system 101, as well as the locations of a B-pillar, a C-pillar and a rear window relative to the imaging system/vehicle sensing system 101. The various locations may be derived from a CAD-model of the cabin 1.

In embodiments, semantic segmentation and depth estimation data of the vehicle cabin 1 may be used to create a 3D map of the vehicle cabin, which may then be used to optimize the determination of the danger levels. If clutter or luggage is detected on the backseat or front passenger seat of the vehicle that may fit into a safe place in the cabin 1 such as the trunk, a message be sent to the driver 4, using semantic segmentation and depth estimation data relating to the vehicle cabin 1.

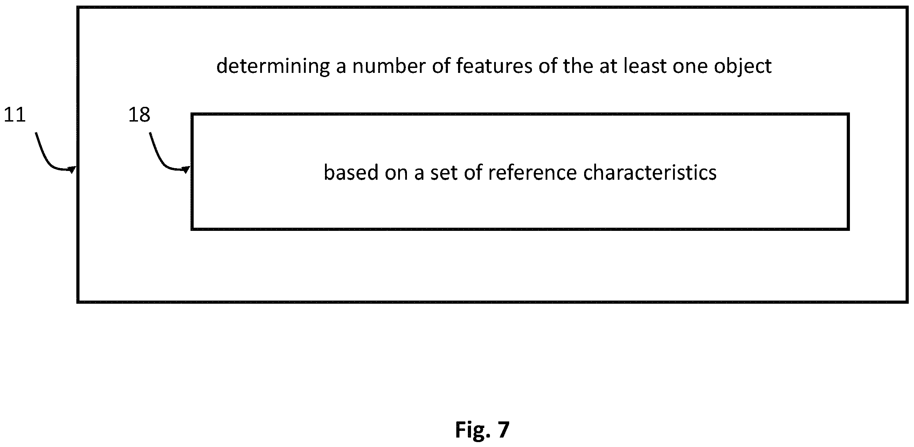

In some embodiments and as shown in FIG. 7, determining 11 the features of the object is based 18 on a set of reference characteristics. This enables a reliable determination of the type and the properties of the object 5, 6, 7 based on predetermined features for object classes.

By determining a current position of an object, such as object 5, 6, 7 in the cabin 1 together with an object type/class a danger level for an object with respect to one or more occupants inside the cabin 1 may be determined independent of whether or not the object is secured in its position.

In embodiments, the detected objects may be classified into specific risk categories, for example, jackets, pillows, or blankets (in general soft objects) could be grouped into a lower risk category, in which generally a lover danger level may be determined, while boxes, suitcases (in general hard objects) could be grouped into a higher risk category with a default basic danger level, such as "medium", which may be exceeded depending e. g. of the occupancy of the cabin, the driving situation of the vehicle, whether the object is secured in its position etc. In further embodiments, the risk level would be directly estimated as a numeric value without grouping into risk categories.

Since bounding boxes surrounding detected objects may differ between consecutive frames although no movement of an object, such as object 5, 6, 7, has taken place, a feature-based tracking algorithm may be applied in addition in order to accurately track movements of the detected objects 5, 6, 7 without depending only on the detection accuracy of the previous step. This enables a reliable determination of the type of an object, such as object 5, 6, 7 which in turn enables a more reliable determination of the danger level of the corresponding object.

A set of reference characteristics may depend on the type of the object, such as objects 5, 6, 7. In the case of e. g. a mobile phone or a notebook, the reference characteristics may comprise the shape of the object, usually including a flat rectangular shape as well as the size said objects usually have. In the case of e. g. a suitcase, as shown by object 7 in FIG. 3, also a rectangular form and a number of defined sizes typically for suitcases may comprise the corresponding set. In the case of skateboard and bicycles, the form of the wheels and frame parts may form part of the corresponding set of characteristics. In further embodiments, a cylindrical for may be comprised for the set of characteristics for doses and bottles, such as e. g. object 6 of FIGs. 1 and 6.

In embodiments, object 5, 6, 7 additionally may be classified, based in the set of characteristics, as valuable (e. g. an antiquarian book, a porcelain vase, a bowl or a pot with food or fluid (which may spill its content over the seat, such as the back seat of the vehicle, in the case of an unintended movement) and despite may having a low risk to become dangerous for passengers during an accident or hard breaking, their determined danger level therefore being "low", it nevertheless may be useful for the driver 4 to receive, by the system 100, an indication about the potential value of object 5, 6, 7, especially when the driver is not aware about the value of said object. Therefore, a message may be output with the warning signal that a potentially valuable object is moving during driving and could be damaged.

In further embodiments, object 5, 6, 7 may be classified by the system 100 as a pet, such as e. g. a dog lying on the back seat and being classified as exposed to a danger when not being buckled up on the back seat in some way. Pets, such as dogs, cats, rabbits etc. may also be classified by the system 100 as exposed to a danger when not being secured in e. g. a pet carrier.

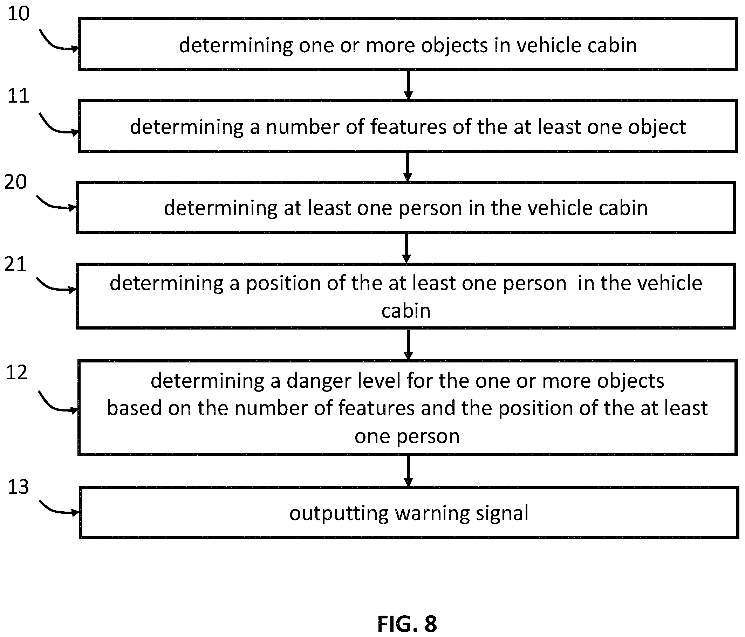

In some embodiments and as shown in FIG. 8, the method further comprises, determining, in an activity 20, based on the one or more images, at least one person in the vehicle cabin 1, determining, in an activity 21, a position of the at least one person in the vehicle cabin 1; wherein determining 12 the danger level is additionally based on the position of the at least one person. This enables the determination of a danger level for each individual person occupying the vehicle cabin 1, especially for self-driving taxis, valet parking etc.

Referring to FIG. 1 and 6, the determination 20 may yield that there are three persons inside the vehicle cabin 1, with the person 4 sitting in the driver's seat, person 2 sitting in the front seat next to the driver and person 3 sitting on the back seat. Objects 5, 6, 7, being positioned either on the middle console or at various positions at the back seat are therefore positioned at different locations with respect to the occupants 2, 3, 4 of the vehicle. Each object 5, 6, 7 may therefore pose a different danger to the occupants which may be reflected in the corresponding determined danger levels.

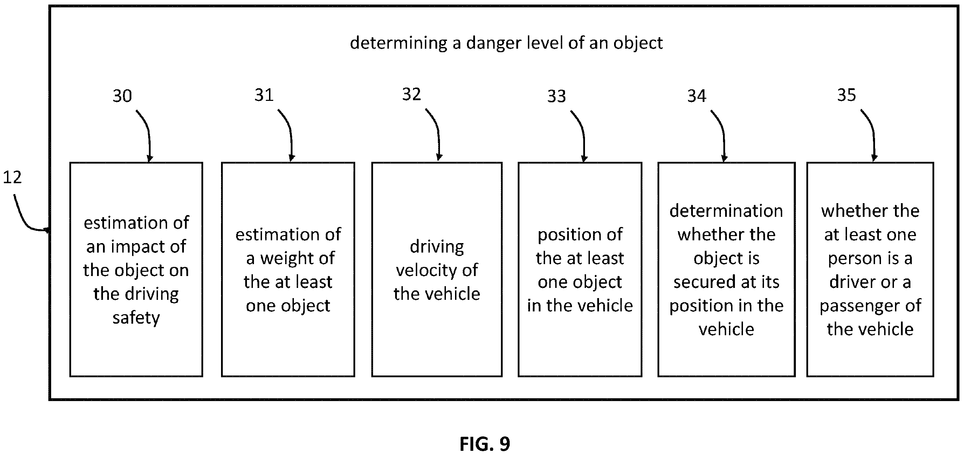

In some embodiment and as shown in FIG. 9, wherein the determination 12 of the danger level is further based on: an estimation 30 of an impact of the object on the driving safety; an estimation 31 of a weight of the at least one object; a driving velocity 32 of the vehicle; a position 33 of the at least one object in the vehicle; a determination 34 whether the object is secured at its position in the vehicle, and in the case the determination being positive, decreasing the danger level; whether the at least one person is a driver 4 or a passenger 2, 3 of the vehicle. This enables a flexible determination of the danger level based on object properties, how it is located and secured inside the vehicle cabin 1, the occupancy of the cabin 1 and the driving situation of the vehicle.

Referring again to FIG. 1 or 6, the impact of the objects 5, 6, 7 on the driving safety may be different. Objects 5 and 7, representing e. g. a jacket and a suitcase and being positioned on the back seat, may have a smaller impact on the overall driving security, since they may have a far less impact on the driver 4 of the vehicle such as e. g. object 6, which since of being deposited on the middle console, may impact the driver's ability to safely steer the vehicle much more, e. g. when sliding or rolling in the footwell area of the cabin 1 (as discussed in more detail below), despite having a much lower estimated weight than e. g. objects 5 and 7.

However, a jacket, as represented by object 5, or another type of clothing or a blanket may, despite their usually moderate weight and their soft nature, may pose a high danger to e. g. the driver 4, since these types of objects may easily fly around in the vehicle cabin 1, especially in the cases of increased acceleration or deceleration, such as in the case of a hard braking, of the vehicle, may land finally on the driver 4 and may obscure the sight of the driver 4 onto the street and the surrounding traffic situation. Therefore, even for objects such as jackets 5, a high danger level may be determined, especially in relation to the driver 4.

Further, although not shown in the figures, objects being positioned at positions comparable to the height of the driver 4 (or the passengers 2, 3) may pose a greater danger, especially to the driver 4 of the vehicle, since hits by objects on a person's head are usually more difficult endure by said person, such as driver 4, and also may much easier block the unhindered sight of the driver 4. Therefore, an object location of an object, such as object 5, 6, 7 at height levels comparable to the height position of a vehicle occupant's head, such as the height position of the head of the driver 4, may result in the determination of a high danger level for said object.

Further examining FIG. 1, 2 or 6, all objects 5, 6, 7 are not secured in their positions. Taking object 7 as an example, representing a suitcase having a weight of e. g. 20 to 30 kg, an examination of FIG. 1, 2, or 6 yields that said suitcase 7 is not secured in its position e. g by safety belt 9 (see FIG. 2). This may influence the determination of the danger level for object 7. In the case of being secured in its position, the danger level for object 7 may be determined lower than for the case of the object 7 not being secured in its position.

In embodiments, the system 100 may detect protection systems between a trunk and the seats of the vehicle, e.g., for station wagons (nets or protection bars), and may suppress the output of the warning signal when a net and/or a protection bar is detected.

Referring further to FIG. 1 or 6, the danger level determined for the driver 4 may be generally determined as being higher for the same objects, such as object 6 on the middle console (as mentioned before), as for the passengers 2, 3, since the driver has the task of driving the vehicle and therefore bears an increased responsibility for the safety of the passengers 2, 3 and the traffic surrounding the vehicle. At a first instance, the danger level e. g. for object 6, representing e. g. a cola dose, may be determined to be low, since said dose 6, e. g. when an emergency braking is applied to the vehicle, may move in the forward direction, therefore missing the driver 4. Even when hitting the driver 4, e. g. when moving during a right-turn curve of the vehicle, the danger that the driver 4 may be disturbed or even injured is low due to the small size and the light weight of the dose 6. However, the danger that the dose 6 may slide or roll into the footwell area and blocking the pedals of the driver, e. g. the braking pedal, may be determined to be high due to the position of the dose 6 on the middle console being located usually next to the footwell area. Therefore, the overall danger level of the dose 6 may be determined as "high" for the driver 4, on e. g. an aforementioned three-level danger scale (comprising the numerical values 0, 1 and 2).

On the other hand, when determining the danger level for object 7, representing e. g. a bigger suitcase, the danger level relating to said suitcase and determined for the driver 4 may, at a first point, seem be higher than for the dose 6 due to the bigger size and heavier weight of said suitcase 7 compared to the dose 6. However, the chance that said suitcase 7, in the case of a movement, made, due to its size, its way through between or over the two front seats and hit the driver 4 or even slides further into the footwell area is considered to be low. Therefore, the determined danger level of said suitcase with respect to the driver 4 is "medium" on the three-level danger scale.

Referring further to FIG. 1 or 6 and considering now passenger 2 sitting in the front seat next to the driver 4, the danger lever determined for the dose 6 with respect to the passenger 2 may be "low", due to the fact that a hit by moving dose 6 may not hurt passenger 2 seriously and passenger 2 bears no driving responsibility.

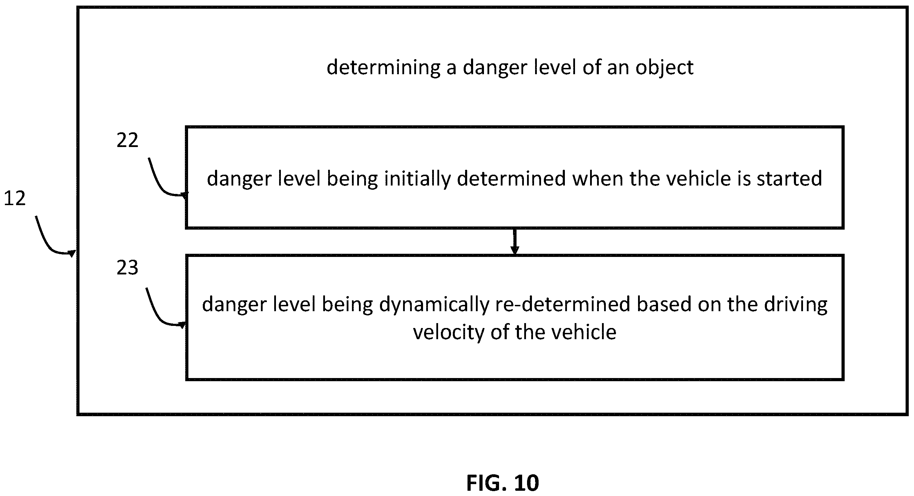

In some embodiments and as shown in FIG. 10, the danger level is initially determined 22 when the vehicle is started and dynamically re-determined 23 based on the driving velocity of the vehicle. This enables a flexible adaptation of the determined danger level on the current driving situation of the vehicle.

Referring again to FIG. 1 or 6, object 6, representing the cola dose, located on the middle console may pose different kinds of danger in situations when the vehicle is starting and when the vehicle is driving at usually driving velocities. At start, the accelerations are usually moderate and the cola dose 6 may most probably remain in place (when e. g. not being tossed down by passenger 2). The determined danger level may therefore be "low". However, when being in a driving state, the vehicle and therefore the dose 6 may be subjects to higher accelerations, resulting in a higher probability of a sudden displacement from its position on the middle console and sliding or rolling into the footwell aera of the cabin 1. Therefore, the danger level determined for the dose with respect to the driver 4 may be "high".

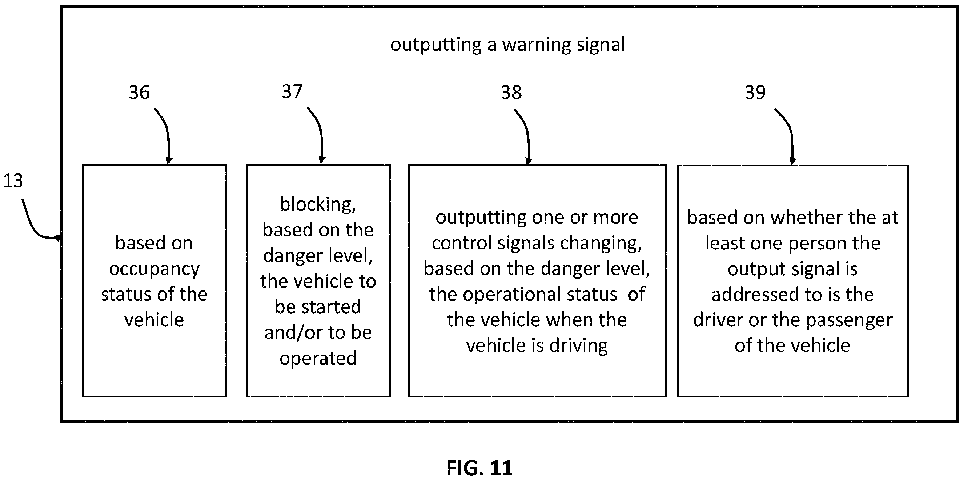

In some embodiments and as shown in FIG. 11, outputting 13 the method further comprises that the warning signal is further based 36 on an occupancy status of the vehicle, or comprises blocking 37, based on the danger level, the vehicle to be started and/or to be operated, or comprises outputting one or more control signals 38 changing, based on the danger level, the operational status of the vehicle when the vehicle is driving. This enables a flexible output of the warning signal based on the occupancy status and further enables the activation of additional safety measures based on the current driving status of the vehicle.

Referring again to FIG. 1 or 6, the warning signal may depend whether there is e. g. only driver 4 seated in the vehicle cabin 1 or whether there are also passengers 2, 3 occupying the cabin 1. The first case, the warning signal may be directed only to the driver, showing e. g. on a touchscreen of the dashboard a message the danger level determined from objects 5, 6, 7 in relation to driver 4. In the case of further occupants of the vehicle cabin 1, an additional warning signal may be outputted e. g. on the touchscreen, indicating to the driver 4 also the corresponding danger levels for the passengers 2. 3. Further, in the case of further occupants in the vehicle cabin, warning signals may also be outputted at the locations where the occupants are seated, such as at the positions of passengers 2, 3, e. g in the case of visual signals, such as flashing red lights or corresponding messages on local touchscreens.

Further, in the case of heavy and bulky objects, such as the suitcase 7 in FIG. 2, the danger level maybe determined as "high". Based on this determination, the start of the vehicle may be blocked, until the determined danger level has been decreased e. g. to "medium" by a remedy activity performed by the driver 4 or the passengers 2, 3, such a remedy action may include e. g. securing suitcase 7 on its position using seat belt 9, as shown in FIG. 2. When the vehicle is driving, the danger level determined for the suitcase may change during driving again to "high", e. g. in the case passenger 3 would unfasten seatbelt 9 in order to open the suitcase. The determined danger level jumps then may change from "medium" again to "high", causing also a change in the operational status of the vehicle, such as decelerating the vehicle, depending on the traffic situation, down to a velocity where the determined danger level changes again back to "medium".

In some embodiments and as shown in FIG. 11, the warning signal is further based on 39 whether the at least one person the output signal is addressed to is the driver or the passenger of the vehicle.

A warning signal directed to the driver 4 may comprise information relating to the danger level for the driver 4 as well as to individual danger levels for the passengers in the vehicle cabin 1, such as the danger levels for passengers 2, 3 respectively, and information concerning appropriate remedy actions. In addition, information relating to a change in the operational status of the vehicle may be comprised in the warning signal directed to the driver 4, such as information indicating that in the case when a danger level has been determined as "high", the vehicle may be decelerated. On the other hand, a warning signal directed to a passenger, such as passenger 2, 3, may comprise only information relating to the danger level to the respective passenger.

In embodiments, the warning signal may be further based on additional information from external-sensor-based exterior perception, such as the perception of the surrounding traffic situation, and/or maps, enabling the prediction of short-term or long-term driving trajectories and providing additional information for the determination of the danger level. This enables outputting of a warning signal even before any movement of an object, such as object 5, 6, 7, inside the cabin 1 may be tracked.

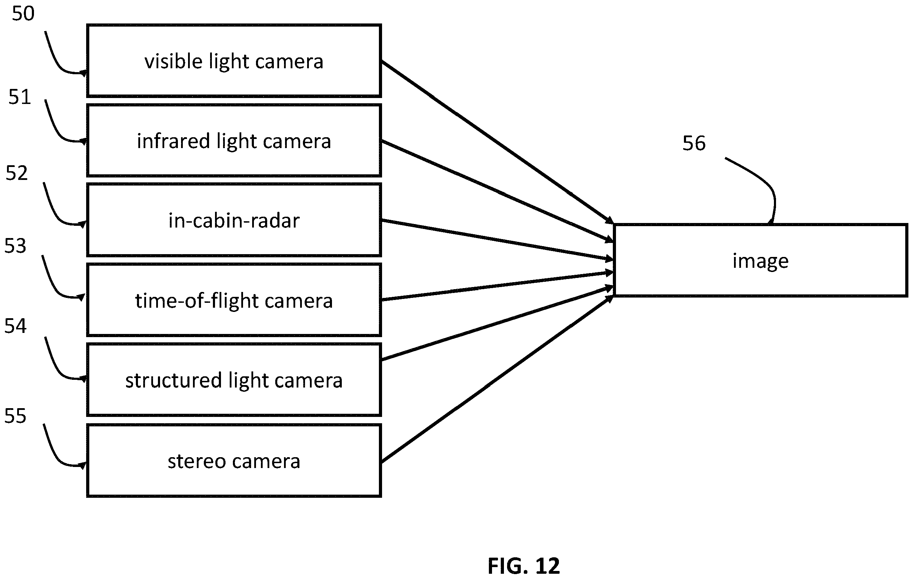

In some embodiments and as shown in FIG. 12, the method further comprises that the one or more images 56 comprise images are taken by one or more visible light 50 and/or infrared 51 cameras and/or an in-cabin radar 52, the one or more cameras being located inside the vehicle cabin 1. The images 56 may further comprise images taken by time-of-flight cameras 53 or structured light cameras 54 or stereo cameras 55. The method further may comprise illuminating the vehicle cabin 1 with infrared light and/or radio waves. This enables a flexible determination of the movement state of the objects inside the cabin 1, adapted to changing light and occupancy conditions inside the vehicle cabin 1, especially at low-light and night conditions.

Visible light/infrared cameras 50, 51, comprising e. g. RGB-IR sensors provide a significant advantage as it allows to capture both day and night images with the same sensor. An RGB-IR image sensor works in both ranges: visual spectrum range and IR spectrum range. By committing typically 25% of its pixel array pattern to infrared (IR) and 75% to RGB, the RGB-IR sensor can simultaneously capture both RGB and IR images. An RGB-IR image sensor does not have any dedicated filter to improve the quality of the signal: it measures everything and extracts both images IR and RGB. This causes some optical issues because the signals in both IR and RGB domains are contaminated. All the pixels in the pixel array of the RGB-IR sensor are receptive to IR signal. It means that not only the IR pixels are receptive to the IR signal but also the RGB pixels. Furthermore, the IR pixels also receive a small amount of visible light signal. In automotive industry, infrared signals play a key role in automated image processing applications like surveillance and driver monitoring. Usually, these applications require pure infrared images, and they cannot work on raw RGB-IR inputs.

In embodiments, an imaging system 101 inside the vehicle cabin 1 comprises a camera operating in the visible 50 and/or the infrared 51 electromagnetic spectrum. Separate cameras operating in the visible and infrared electromagnetic spectrum enable the provision of images based on the pure visible spectrum and pure infrared images.

By using the e. g. pixel image generated by an indirect time-of-flight (TOF)-camera 53, a reference image could be added to the image processing system of the vehicle. Images taken from TOF-cameras and in-cabin radars may be used additionally as a plausibility check for safety critical applications like determining the movement of an object inside the cabin 1, such as object 5, 6, 7. Furthermore, structured light and stereo imaging may be used to generate 3D depth maps of the vehicle cabin 1, which may be added to the image processing system of the vehicle.

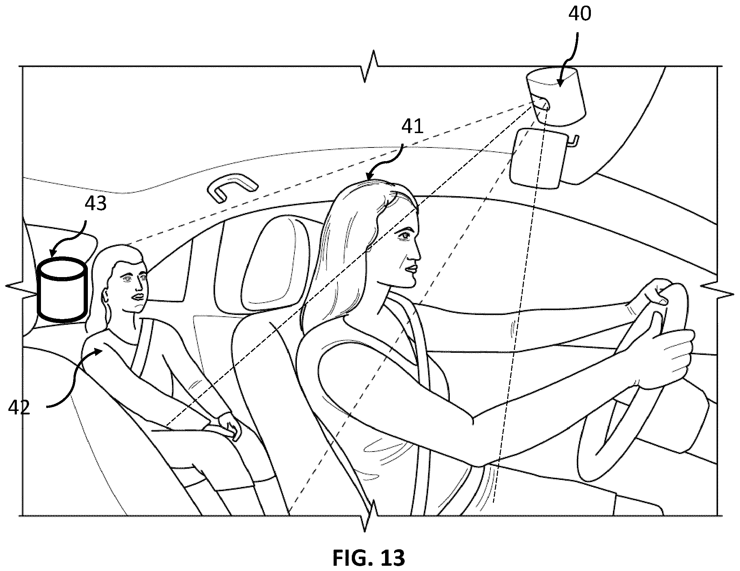

As shown in FIG. 13, the image data are generated by the imaging system 101, comprising a camera 40 installed at the rear mirror inside the vehicle cabin 1, by illuminating at least the driver 41, one or more passengers 42 and at least one object 43. This enhances the accuracy of the occupancy detection in the vehicle cabin as well as the movement detection of the objects as the infrared reflective properties of points on the persons 41, 42 occupying the vehicle and the object(s) 43 are also used for the movement detection of the object(s) 43 and the corresponding determination of their danger levels.

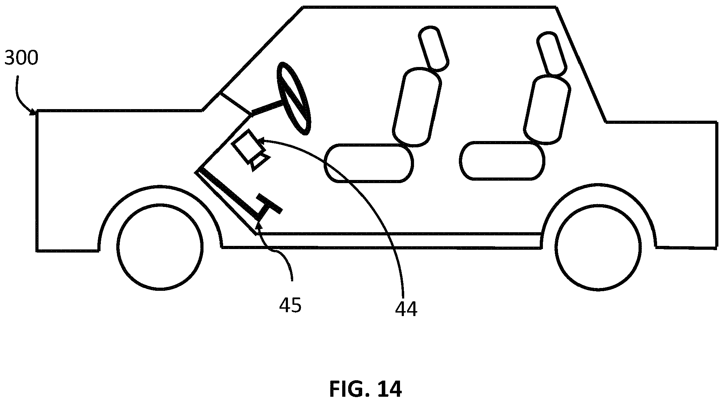

In some embodiments and as shown in FIG. 14, at least one of the one or more cameras 44 surveils the footwell area 45 of the vehicle 300. This further enhances the safety of the vehicle 300 and its occupants (such as persons 2, 3, 4), especially during driving of the vehicle 300, where it is essential that the driver can operate the pedals, such as the braking pedal, unhindered in order to execute a safe operation of the vehicle 300. Camera 44 may be installed in an appropriate position inside the vehicle cabin 1, e. g. below the steering column, , as shown in FIG. 14, or under a vehicle seat, such as the driver's seat. In embodiments, the camera 44 may comprise a radar.

According to an aspect and as shown in FIG. 15, a system 100 is provided for determining the movement of an object in a vehicle cabin in a vehicle, the system 100 comprising a sensor system 101, a data processing system 102, interfaces for outputting a warning signal 102, the system configured to perform any one of the methods as described in the preceding paragraphs.

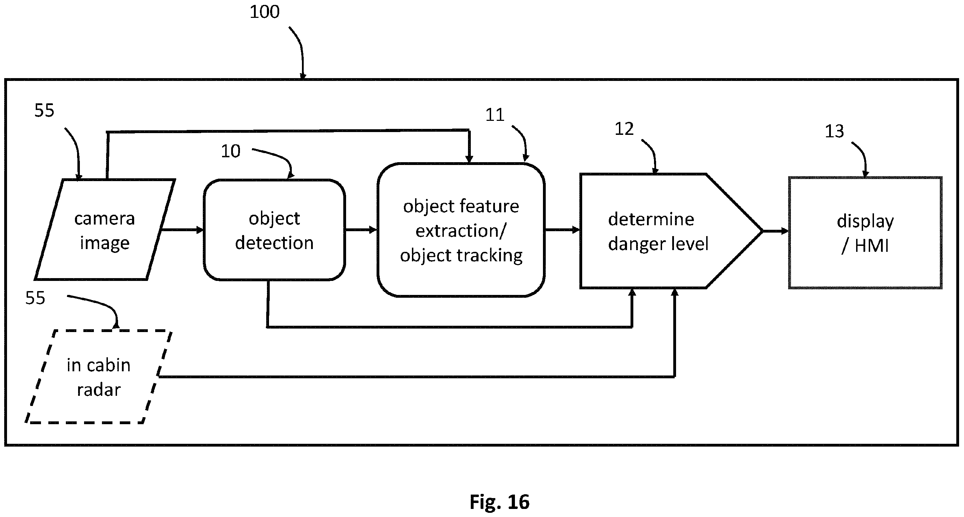

FIG. 16 shows an embodiment of system 100 for detecting for detection of an object in a vehicle cabin 1 and its movement, implementing the functionality as described herein. Imaging/vehicle sensing system 101 may comprise of cameras 50, 51(vis/IR) and additionally e. g. of an in-cabin radar 52 taking images 55 of the interior of the vehicle cabin 1. Data processing system 101 may execute, based on the images 55, the activity 10 of determining an object inside the cabin, such as objects 5, 6, 7. Data processing system 101 may further execute the activity 11 of determining a number of features of the at least one object 5, 6, 7 and the activity 12 of determining of a danger level for the at least one object 5, 6, 7 based on the number of features. In response to determining that the danger level meets a given criteria, the interface 103 outputs, in the activity 13, the warning signal.

According to an aspect, a vehicle 300 is provided comprising the system 100 for determining the movement of an object in a vehicle as described in the preceding paragraphs executing any one of the methods as described within the present disclosure. Within the present disclosure, the term "vehicle" includes all type of vehicles, such as a car, an autonomous car, a streetcar, a railway-car etc.

FIG. 17 is a diagrammatic representation of internal components of a data processing system 200 implementing the functionality as described herein, such as data processing system 102 of FIG. 15. The data processing system 200 may be located in the vehicle and includes at least one processor 201, a user interface 202, a network interface 203 and a main memory 206, that communicate with each other via a bus 205. Optionally, the data processing system 200 may further include a static memory 207 and a disk-drive unit (not shown) that also communicate with each via the bus 205. A video display, an alpha-numeric input device and a cursor control device may be provided as examples of user interface 202.

Furthermore, the data processing system 200 may also comprise a specified sensing interface 204 to communicate with imaging/sensor system 101 of the vehicle 300. Alternatively, the data processing system 200 may communicate with the imaging/sensor system 101 via the network interface 203. The imaging/sensor system 101 is used for generating interior cabin data for determination of the movement of an object, such as object 5, 6, 7 in the vehicle cabin 1. The data processing system 200 may also be connected to database systems (not shown) via the network interface, wherein the database systems store at least part of the images needed for providing the functionalities described herein.

The main memory 206 may be a random-access memory (RAM) and/or any further volatile memory. The main memory 206 may store program code for the depth estimation system control 208 and the determination of a correct depth estimation 209. The memory 206 may also store additional program data required for providing the functionalities described herein. Part of the program data 210, the determination of a correct depth estimation 209 and/or the depth estimation system control 208 may also be stored in a separate, e. g. cloud memory and executed at least in part remotely. In such an exemplary embodiment, the memory 206 may store the depth estimations and the revised depth estimations according to the methods described herein in a cache 211.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that may be used to store the desired information and which may be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computerized method for vehicle cabin safety, comprising:
- determining, based on one or more images showing an interior of the vehicle cabin, at least one object in the vehicle cabin;
- determining a number of features of the at least one object;
- determining a danger level for the at least one object based on the number of features;
- in response to determining that the danger level meets a given criteria, outputting a warning signal.

2. The method of claim 1, further comprising:
- tracking, based on multiple images showing the interior of the vehicle cabin, a movement state of the object;
- wherein determining the danger level is additionally based on the movement state of the object.

3. The method of claim 2, wherein tracking the movement state of the object comprises determining bounding boxes for the object in subsequent images.

4. The method according to claim 2 or claim 3, wherein tracking the movement state of the object comprises executing machine learning algorithms and/or being based on a three-dimensional (3D) reference model of the vehicle cabin.

5. The method according to any one of the preceding claims, wherein determining the features of the object is based on a set of reference characteristics.

6. The method according to any one of the preceding claims, further comprising:
- determining, based on the one or more images, at least one person in the vehicle cabin;
- determining a position of the at least one person in the vehicle cabin;
- wherein determining the danger level is additionally based on the position of the at least one person.

7. The method according to any one of the preceding claims, wherein the determination of the danger level is further based on:
- an estimation of an impact of the object on the driving safety;
- an estimation of a weight of the at least one object;
- a driving velocity of the vehicle;
- a position of the at least one object in the vehicle;
- a determination whether the object is secured at its position in the vehicle, and in the case the determination being positive, decreasing the danger level;
- whether the at least one person is a driver or a passenger of the vehicle.

8. The method according to any one of the preceding claims, wherein the danger level is initially determined when the vehicle is started and dynamically re-determined based on the driving velocity of the vehicle.

9. The method according to any one of the preceding claims, wherein outputting the warning signal:
- is further based on an occupancy status of the vehicle;
- comprises blocking, based on the danger level, the vehicle to be started and/or to be operated;
- comprises outputting one or more control signals changing, based on the danger level, the operational status of the vehicle when the vehicle is driving.

10. The method according to any one of claims 6 to 9, wherein outputting the warning signal is further based on whether the at least one person the output signal is addressed to is the driver or the passenger of the vehicle.

11. The method according to any one of the preceding claims, wherein
- the one or more images comprise images are taken by one or more visible light and/or infrared cameras and/or an in-cabin radar, the one or more cameras being located inside the vehicle cabin and/or comprise images taken by time-of-flight cameras or structured light cameras or stereo cameras;
- the method further comprising illuminating the vehicle cabin with infrared light and/or radio waves.

12. The method of claim 11, wherein at least one of the one or more cameras surveils the footwell area of the vehicle.

13. A system for determining the movement of an object in a vehicle cabin in a vehicle, comprising:
- a sensor system,
- a data processing system,
- interfaces for outputting a warning signal,
configured to perform the methods of any one of claims 1 to 12.

14. A vehicle comprising the system of claim 13.

15. A computer program product comprising instructions, which, when executed on a computer, cause the computer to perform the method any one of claims 1 to 12.
